(19) Europäisches Patentamt
European Patent Office
Office européen des brevets

(11) EP 2 687 535 B1

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **13176105.8**

(22) Anmeldetag: **11.07.2013**

(51) Int Cl.:
*C07F 9/09* (2006.01)
*C08G 18/00* (2006.01)
*C08G 18/42* (2006.01)
*C08K 5/00* (2006.01)
*C08K 5/521* (2006.01)
*C08G 18/48* (2006.01)
*C08G 101/00* (2006.01)

(54) **Halogenfreie Poly(alkylenphosphate)**

Halogen-free poly(alkylene phosphate)

Poly(alkylphosphate) sans halogène

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2012 EP 12177287**

(43) Veröffentlichungstag der Anmeldung:
**22.01.2014 Patentblatt 2014/04**

(73) Patentinhaber: **LANXESS Deutschland GmbH**
**50569 Köln (DE)**

(72) Erfinder:
- **Hansel, Jan-Gerd**
**51469 Bergisch Gladbach (DE)**
- **Tebbe, Heiko**
**41539 Dormagen (DE)**

(56) Entgegenhaltungen:
**EP-A1- 0 771 810**
**EP-A1- 1 746 129**
**EP-A1- 2 476 684**
**WO-A1-2004/099292**

EP 2 687 535 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft neue, halogenfreie Oligomerenmischungen von Poly(alkylenphosphaten) und deren Verwendung zur Flammschutzausrüstung, insbesondere von Polyurethanen, sowie derart ausgerüstete Polyurethane und Polyurethanschäume und Verfahren zu deren Herstellung.

Polyurethane werden in vielen Bereichen, wie Möbel, Matratzen, Transport, Elektro, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethane in der Regel mit Flammschutzmitteln ausgerüstet werden. Hierzu ist eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z. B. Melamin, Ammoniumpolyphosphat und Ammoniumsulfat dosiertechnische Probleme auf, die vielfach Modifikationen der Verarbeitungsanlagen, d. h. aufwendige Umbauten und Anpassungen notwendig machen.

Die häufig eingesetzten Flammschutzmittel Tris(chlorethyl)phosphat (Molgewicht 285 g/mol) und Tris(chlorisopropyl)phosphat (Molgewicht 327 g/mol) stellen leicht dosierbare Flüssigkeiten dar. Von offenzelligen Polyurethanweichschaumsystemen für die Automobil-Innenausstattung wird jedoch in letzter Zeit immer mehr gefordert, dass die gasförmigen Emissionen (Volatile Organic Compounds, VOC) und vor allem die kondensierbaren Emissionen (Fogging) aus diesen Schäumen so niedrig wie möglich sein sollen. Diesen Anforderungen werden die oben genannten Flüssigkeiten aufgrund ihrer relativ niedrigen Molgewichte und der daraus resultierenden zu hohen Flüchtigkeit nicht mehr gerecht.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden.

Das ebenfalls flüssige Tris(2,3-dichlorisopropyl)phosphat hat mit einem Molgewicht von 431 g/mol eine so niedrige Flüchtigkeit, dass damit akzeptable Foggingwerte erreichbar sind. Allerdings werden aus ökotoxikologischen Gesichtspunkten sowie aufgrund verbesserter Brandnebenerscheinungen bezüglich Rauchgasdichte und Rauchgastoxizität häufig halogenfreie Flammschutzmittelsysteme bevorzugt. Auch aus anwendungstechnischen Gründen sind halogenhaltige Flammschutzmittel als problematisch anzusehen. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschaumstoffe auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstoffbahn mit Hilfe einer Flamme angeschmolzen und in unmittelbarem Anschluss daran mit einer Textilbahn verpresst wird.

Die bisher bekannten flüssigen halogenfreien Flammschutzmittelsysteme, wie z. B. Triethylphosphat oder andere Alkyl- oder Arylphosphate, wie beispielsweise Diphenylkresylphosphat, genügen den oben genannten Anforderungen an geringe VOC bzw. geringes Fogging nur unzureichend oder zeigen keine ausreichende Flammschutzwirkung.

Lösungen im Sinne niedriger Foggingbeiträge bieten oligomere Phosphorsäureester. Diese sind seit langem bekannt, beispielsweise aus US 2,952,666 oder US 3,228,998. Nachteilig an den in US 2,952,666 beschriebenen Substanzen ist ihr inhärent hoher Gehalt an saueren HO-P(=O)$(OR)_2$-Gruppen. Die in US 3,228,998 beschriebenen Substanzen weisen pro Polymerkette zwei Hydroxylgruppen auf. Sowohl Säuren als auch ein hoher Gehalt an Hydroxylgruppen sind in der Herstellung von Polyurethanen unerwünscht, da sie die Isocyanatreaktionen stören. Beispielsweise ist die Qualität eines Polyurethanschaumstoffs von der Abstimmung des Katalysatorsystems auf die konkurrierenden Reaktionen der Polyisocyanate mit den Polyolen und gegebenenfalls dem Wasser abhängig. Wird nun mit einem hydroxylgruppentragenden Flammschutzmittel eine weitere reaktive Komponente eingebracht, so kann es zu Herstellfehlern kommen, wie beispielsweise Schrumpf oder Rissen im Schaum. Das häufig aus mehreren Komponenten bestehende Katalysatorsystem muss dann unter Berücksichtigung der verwendeten Stabilisatoren, Treibmitteln, Zellregulatoren und gegebenenfalls weiteren Bestandteilen auf die Reaktivität des Flammschutzmittels abgestimmt werden. Diese Abstimmung macht zeitintensive Entwicklungsarbeiten notwendig. Darüber hinaus muss eine zusätzliche Menge an Polyisocyanat eingesetzt werden, was aus wirtschaftlichen Gründen unerwünscht ist.

Aus EP-A 0 771 810 ist ein Verfahren zu Herstellung von Mischungen oligomerer Phosphorsäureester einer allgemeinen Formel (I) bekannt, wobei man in einer ersten Stufe aliphatische oder araliphatische Alkohole und/oder Phenole mit Phosphorpentoxid ($P_4O_{10}$) in einem bestimmten Molverhältnis umsetzt, wodurch ein Polyphophorsäurepartialestergemisch einer allgemeinen Formel (V) erhalten wird, das dann in einer zweiten Stufe mit einem Epoxid der Formel (IV) umgesetzt wird. Die Mischungen werden als Flammschutzmittel für Polyurethanschäume eingesetz.

EP-A 1 746 129 offenbart flammwidrige Polyurethanschaumstoffe, die als Flammschutzmittel halogenfreie Tetraalkylbisphosphate enthalten, sowie ein Verfahren zur Herstellung solcher Schaumstoffe und deren Verwendungen.

Aus EP-A 2 476 684 ein Verfahren zur Herstellung von Tetraalkylbisphosphaten bekannt, durch Umsetzung

von Tetrachlorbisphosphaten mit Alkoholen, Neutralisation des gebildeten Chlorwasserstoffs mit einer Base und Abtrennung des bei der Neutralisation gebildeten Salzes von der Reaktionsmischung als Feststoff.

Die WO 2004/099292 offenbart phosporhaltige polymere Verbindungen einer allgemeinen Formel und Verfahren zu deren Herstellung und deren Verwendung als Flammschutzmittel.

Weiterhin ist beispielsweise aus US 3,767,732 und US 4,382,042 eine Klasse von oligomeren Phosphorsäureestern bekannt, die Ethylenbrücken aufweisen und deren Struktur durch die allgemeine Formel

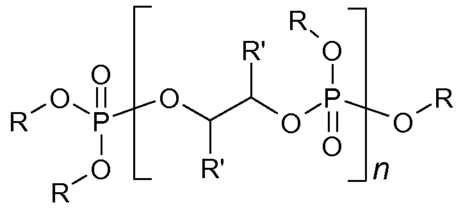

beschrieben werden kann. In dieser Formel stehen beispielsweise die Substituenten R für Alkylreste, R' für H oder Alkylreste und der Index *n* für eine ganze Zahl. Diese Poly(ethylenphosphate) haben wegen ihrer guten Wirksamkeit und niedrigen Foggingbeiträgen kommerzielle Bedeutung erlangt. So wird z.B. das Produkt obiger Formel mit R = Ethyl und R' = H unter dem Markennamen Fyrol® PNX durch ICL-IP vermarktet. Aus der WO 2002/079315 sind Flammschutzmittelzusammensetzungen bekannt, die diesen Wirkstoff als Flammschutzmittel einsetzen.

Diese bekannten Poly(ethylenphosphate) weisen jedoch generell die folgenden Nachteile auf:

- Hohe Viskosität. Die hohe Viskosität beispielsweise von Fyrol® PNX von 1241 mPas bei 23 °C (siehe Vergleichsbeispiele) erschwert die Verarbeitung.

- Bildung von Nebenkomponenten. Die Verwendung der Ethylenbrücke in den Poly(ethylenphosphaten) bringt es mit sich, dass sich bei ihrer Herstellung fünfgliedrige, cyclische Phosphate bilden. Diese sind als Nebenkomponenten in den Poly(ethylenphosphaten) enthalten und führen zu unerwünschter Hydrolyseanfälligkeit und Säurebildung. Dieses Problem ist seit langem bekannt, und es hat zahlreiche Versuche zur Lösung gegeben (vgl. z.B. US 3,891,727, US 3,959,415, US 3,959,414, US 4,012,463 und EP-A 0 448 159). Nach diesen Lösungsvorschlägen läuft jedoch die Vermeidung oder Verringerung von unerwünschten fünfgliedrigen, cyclischen Phosphaten immer auf einen Mehraufwand bei der Herstellung der Poly(ethylenphosphate) hinaus.

- Begrenzte Einsatzmöglichkeiten. Bei der Herstellung von Polyurethanen werden Polyole aus verschiedenen Strukturklassen eingesetzt. Besonders wichtige Klassen sind Polyether-Polyole, d.h. hydroxylgruppenhaltige Polyether, und Polyester-Polyole, d.h. hydroxylgruppenhaltige Polyester. Es zeigte sich, dass sich die bekannten Poly(ethylenphosphate) zwar gut in Kombination mit Polyether-Polyolen verarbeiten lassen, jedoch in Kombination mit Polyester-Polyolen keine brauchbaren Schaumstoffe zu erhalten sind (siehe Vergleichsbeispiele). Dies stellt eine gravierende Einschränkung in der Anwendbarkeit von Poly(ethylenphosphaten) dar, da Maschinen, die zur Herstellung von Polyether-Schaumstoffen unter Verwendung von Poly(ethylenphosphaten) verwendet werden, wegen der Gefahr der Kreuzkontamination nicht auch zur Herstellung von Polyester-Schaumstoffen verwendet werden können, selbst, wenn dabei andere Flammschutzmittel eingesetzt werden sollen. Produzenten, die sowohl Polyether- aus auch Polyester-Schaumstoffe herstellen wollen, müssen also bei der Verwendung von Poly(ethylenphosphaten) nicht nur eine doppelte Logistik für zwei Flammschutzmittel vorhalten, sondern auch einen doppelten Maschinenpark.

Mit dem Problem des Fogging beschäftigt sich auch die WO 96/06885, wo kettenförmige Phosphorsäureester mit 2 bis 11 Phosphorsäureestergruppen als Flammschutzmittel für Polyurethanschaumstoffe empfohlen werden. Oligomerenmischungen werden dort nicht erwähnt. Die bevorzugt eingesetzten Phosphorsäureester aus WO 96/06885 enthalten Arylgruppen, beispielsweise Phenylgruppen. Solche Arylphosphate werden wegen der unvermeidbaren Freisetzung von gesundheitsschädlichen Phenolen unter den Nutzungsbedingungen beispielsweise in der Automobilindustrie nicht mehr akzeptiert.

Aufgabe der vorliegenden Erfindung war es daher, halogenfreie Flammschutzmittel für Polyurethane zur Verfügung zu stellen, die die genannten Nachteile des Standes der Technik überwinden und insbesondere sowohl mit Polyether-Polyolen als auch mit Polyester-Polyolen verarbeitet werden können und möglichst niedrige Fogging-Beiträge leisten.

Diese Aufgabe wird gelöst durch Flammschutzmittel, welche bestimmte Oligomerenmischungen von halogenfreien Poly(alkylenphosphaten) enthalten.

Gegenstand der vorliegenden Erfindung sind daher Oligomerenmischungen, dadurch gekennzeichnet, dass

sie mindestens drei Poly(alkylenphosphate) der Formel (I) enthalten,

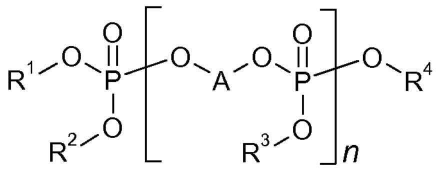

(I),

worin

$R^1$, $R^2$, $R^3$ und $R^4$ unabhängig voneinander jeweils für einen geradkettigen oder verzweigten $C_1$- bis $C_8$-Alkylrest oder für einen geradkettigen oder verzweigten $C_1$- bis $C_4$-Alkoxyethylrest stehen,

A für einen geradkettigen, verzweigten und/oder cyclischen $C_4$- bis $C_{20}$-Alkylenrest steht, oder

A für einen Rest der Formel $-CH_2-CH=CH-CH_2-$, einen Rest der Formel $-CH_2-C=C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$ oder für einen Rest der Formel $-(CHR^5-CHR^6-O)_c-R^9-(O-CHR^7-CHR^8)_d-$ steht,
worin

a für eine ganze Zahl von 1 bis 5 steht,

b für eine ganze Zahl von 0 bis 2 steht,

c und d unabhängig voneinander für eine ganze Zahl von 1 bis 5 stehen,

$R^5$, $R^6$, $R^7$ und $R^8$ unabhängig voneinander für H oder Methyl stehen,

$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

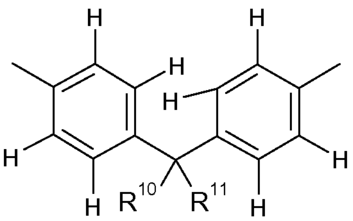

(II),

einen Rest der Formel (III)

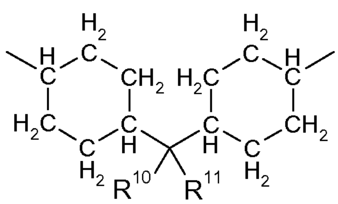

(III),

einen Rest der Formel (IV)

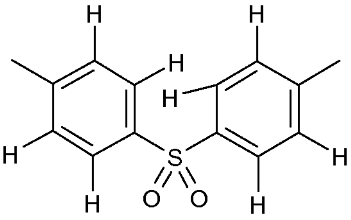
(IV),

oder einen Rest der Formel $-C(=O)-R^{12}-C(=O)-$ steht,
wobei

$R^{10}$ und $R^{11}$ unabhängig voneinander jeweils für H oder $C_1$- bis $C_4$-Alkyl stehen oder $R^{10}$ und $R^{11}$ zusammen für einen gegebenenfalls alkylsubstituierten Ring mit 4 bis 8 C-Atomen stehen,

$R^{12}$ für einen geradkettigen, verzweigten und/oder cyclischen $C_2$-bis $C_8$-Alkylenrest, einen 1,2-Phenylenrest, einen 1,3-Phenylenrest, oder einen 1,4-Phenylenrest stehen, und

*n* für eine ganze Zahl von 0 bis 100 steht,

mit der Maßgabe, dass sich die mindestens drei Poly(alkylenphosphate) der Formel (I) mindestens in der Anzahl *n* der Repetiereinheiten voneinander unterscheiden, und

der Mittelwert der Anzahl der Repetiereinheiten n der mindestens drei Poly(alkylenphosphate) der Formel (I) größer als 1,10 und kleiner als 2,00 ist.

Bevorzugt sind $R^1$, $R^2$, $R^3$ und $R^4$ gleich und bedeuten entweder Ethyl, n-Propyl, iso-Propyl, n-Butyl, iso-Butyl oder n-Butoxyethyl. Bevorzugt ist A ein geradkettiger $C_4$- bis $C_6$-Alkylenrest.

Weiterhin bevorzugt steht A für einen Rest der Formel (II), worin $R^{10}$ und $R^{11}$ gleich sind und Methyl bedeuten, oder einen Rest der Formeln (V), (VI) oder (VII),

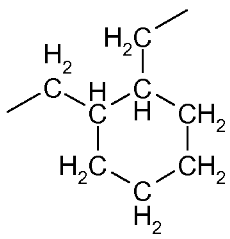
(V)

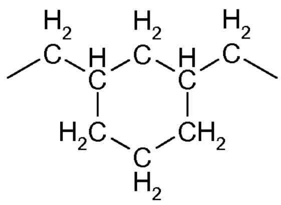
(VI)

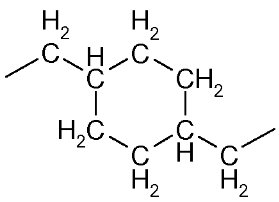
(VII).

Ebenfalls bevorzugt steht A für einen Rest der Formel $-CHR^5-CHR^6-(O-CHR^7-CHR^s)_a-$, worin a eine Zahl von 1 bis 2 ist und $R^5$, $R^6$, $R^7$ und $R^8$ gleich sind und H bedeuten oder für einen Rest der Formel $-(CHR^5-CHR^6-O)_c-R^9-(O-CHR^7-CHR^8)_r$, worin c und d unabhängig voneinander für eine ganze Zahl von 1 bis 2 stehen, $R^9$ für einen Rest der Formel (II) steht, wobei $R^{10}$ und $R^{11}$ gleich sind und Methyl bedeuten.

Bevorzugt sind Oligomerenmischungen enthaltend mindestens drei Poly(alkylenphosphate) der Formel (I), worin

$R^1$, $R^2$, $R^3$ und $R^4$ unabhängig voneinander jeweils für einen geradkettigen oder verzweigten $C_1$- bis $C_4$-Alkylrest oder für einen $C_1$- oder $C_2$-Alkoxyethylrest stehen,

A für einen geradkettigen oder verzweigten $C_4$- bis $C_{10}$-Alkylenrest steht, oder

A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel $-(CHR^5-CHR^6-O)_c-R^9-(O-CHR^7-CHR^8)_d$ steht,
worin

a für eine ganze Zahl von 1 bis 5 steht,

b für eine ganze Zahl von 0 bis 2 steht,

c und d unabhängig voneinander für eine ganze Zahl von 1 bis 5 stehen,

$R^5$, $R^6$, $R^7$ und $R^8$ unabhängig voneinander für H oder Methyl stehen,

$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

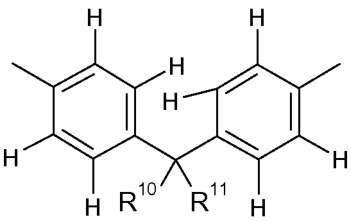

(II),

einen Rest der Formel (III)

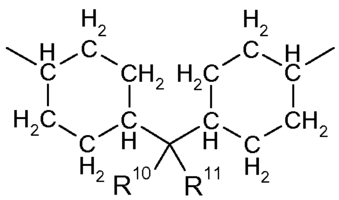

(III),

einen Rest der Formel (IV)

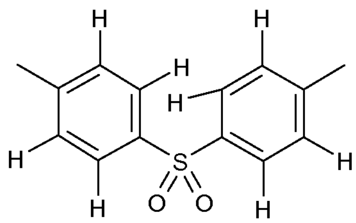

(IV),

oder einen Rest der Formel $-C(=O)-R^{12}-C(=O)-$ steht,
wobei

$R^{10}$ und $R^{11}$ unabhängig voneinander jeweils für H oder $C_1$- oder $C_2$-Alkyl stehen,

$R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und

n für eine ganze Zahl von 0 bis 100 steht.

Ganz besonders bevorzugt sind Oligomerenmischungen enthaltend mindestens drei Poly(alkylenphosphate) der Formel (I)
worin

$R^1$, $R^2$, $R^3$ und $R^4$ unabhängig voneinander jeweils für einen geradkettigen oder verzweigten $C_1$- bis $C_4$-Alkylrest oder für einen n-Butoxyethylrest stehen,

A für einen geradkettigen $C_4$- bis $C_6$-Alkylenrest steht, oder

A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel $-(CHR^5-CHR^6-O)_c-R^9-(O-CHR^7-CHR^8)_d-$ steht, worin

a für eine ganze Zahl von 1 bis 5 steht,

b für eine ganze Zahl von 0 bis 2 steht,

c und d unabhängig voneinander für eine ganze Zahl von 1 bis 5 stehen,

$R^5$, $R^6$, $R^7$ und $R^8$ unabhängig voneinander für H oder Methyl stehen,

$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

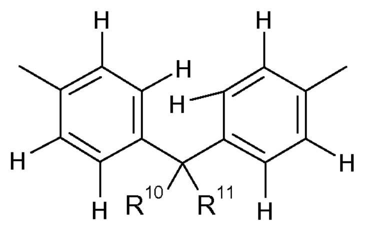

(II),

einen Rest der Formel (III)

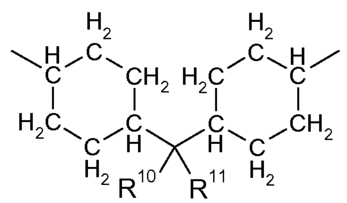

(III),

einen Rest der Formel (IV)

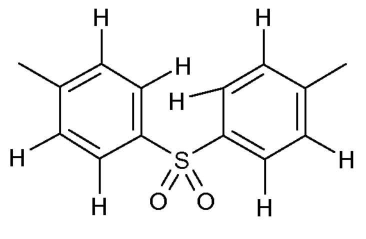

(IV),

oder einen Rest der Formel $-C(=O)-R^{12}-C(=O)-$ steht, wobei

$R^{10}$ und $R^{11}$ unabhängig voneinander jeweils für H oder $C_1$- oder $C_2$-Alkyl stehen,

$R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und

*n* für eine ganze Zahl von 0 bis 100 steht.

Insbesondere bevorzugt sind Oligomerenmischungen enthaltend mindestens drei Po-ly(alkylenphosphate) der Formel (I) worin

$R^1$, $R^2$, $R^3$ und $R^4$ gleich sind und für Ethyl, n-Propyl, iso-Propyl, n-Butyl, iso-Butyl oder n-Butoxyethyl stehen,

A für einen geradkettigen $C_4$-bis $C_6$-Alkylenrest steht, oder

A für einen Rest der Formeln

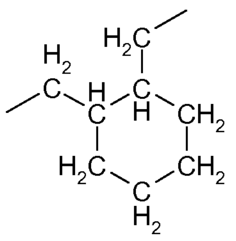
(V)
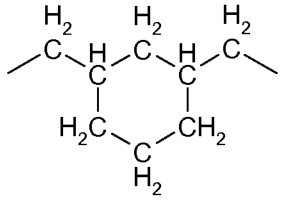
(VI) oder
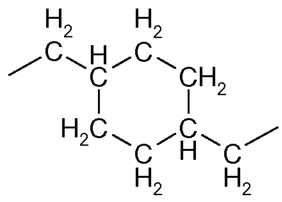
(VII)

steht, oder

A für einen Rest $-CHR^5-CHR^6-(O-CHR^7-CHR^8)_a-$ steht, worin a eine ganze Zahl von 1 bis 2 ist und $R^5$, $R^6$, $R^7$ und $R^8$ gleich sind und für H stehen, oder für einen Rest $-(CHR^5-CHR^6-O)_c-R^9-(O-CHR^7-CHR^8)_d-$, worin c und d unabhängig voneinander für eine ganze Zahl von 1 bis 2 stehen, $R^5$, $R^6$, $R^7$ und $R^8$ gleich sind und für H stehen, $R^9$ für einen Rest der Formel (II) steht, wobei $R^{10}$ und $R^{11}$ gleich sind und für Methyl stehen,
und

n für eine ganze Zahl von 0 bis 20 steht.

Vorzugsweise sind die erfindungsgemäßen Oligomerenmischungen und die darin enthaltenen Poly(alkylenphosphate) halogenfrei. Der Begriff "halogenfrei" im Sinne der vorliegenden Erfindung bedeutet, dass die Poly(alkylenphosphate) der Formel (I) die Elemente Fluor, Chlor, Brom und/oder Iod nicht enthalten und dass die erfindungsgemäße Oligomerenmischungen keine anderen Substanzen in einer Menge enthält, die einen Gehalt an einem oder mehreren der Elementen Fluor, Chlor, Brom und Iod von größer als 5000 ppm bezogen auf die Oligomerenmischung verursacht.

Die erfindungsgemäßen Oligomerenmischungen enthalten mindestens drei, bevorzugt mehr als drei verschiedene Poly(alkylenphosphate) der allgemeinen Formel (I), die sich mindestens in der Anzahl n der Repetiereinheiten und damit in ihrer Molmasse voneinander unterscheiden. Zur Beschreibung solcher Oligomerensmischungen benutzt der Fachmann geeignete Mittelwerte, wie beispielsweise die zahlenmittlere Molmasse $M_n$ und den Mittelwert der Anzahl der Repetiereinheiten n der in der Oligomerenmischung enthaltenen Moleküle der Formel (I).

Erfindungsgemäß wird die zahlenmittlere Molmasse $M_n$ der in der Oligomerenmischungen enthaltenen Poly(alkylenphosphate) durch Gelpermeationschromatographie mit Tetrahydrofuran als Elutionsmittel gegen Polystyrolstandards bestimmt. Diese Methode ist dem Fachmann bekannt, beispielsweise aus DIN 55672-1:2007-08. Aus $M_n$ lässt sich unter Berücksichtigung der Stöchiometrie der Formel (I) der Mittelwert der Anzahl der Repetiereinheiten n der in der Oligomerenmischung enthaltenen Poly(alkylenphosphate) leicht berechnen (siehe Beispiele).

Wesentlich für die vorliegende Erfindung ist der überraschende Befund, dass nur Oligomerenmischungen aus Poly(alkylenphosphaten) der Formel (I) die gesuchte Kombination von Eigenschaften aufweisen, deren Mittelwert der Anzahl der Repetiereinheiten n der in der Oligomerenmischung enthaltenen Poly(alkylenphosphate) der Formel (I) größer als 1,10 und kleiner als 2,00 ist. Die erfindungsgemäßen Oligomerenmischungen sind gekennzeichnet durch gute Flammschutzwirksamkeit, niedriges Fogging, niedrige Viskosität und gute Verarbeitbarkeit sowohl mit Polyether-Polyolen als auch mit Polyester-Polyolen.

Bevorzugt weisen die in den erfindungsgemäßen Oligomerenmischungen enthaltenen Poly(alkylenphosphate) der Formel (I) einen Mittelwert der Anzahl der Repetiereinheiten n von größer als 1,20 und kleiner als 1,90 auf.

Die erfindungsgemäßen Oligomerenmischungen können prinzipiell hergestellt werden durch dem Fachmann bekannte Methoden zur Herstellung von Alkylphosphaten. Beispielsweise können die erfindungsgemäßen Oligomerenmischungen hergestellt werden durch die Reaktion von Alkyldichlorphosphaten der Formel $MO-POCl_2$, worin M für einen Rest $R^1$, $R^2$, $R^3$ oder $R^4$ steht und $R^1$, $R^2$, $R^3$ und $R^4$ die oben angegebenen allgemeinen und bevorzugten Bedeutungen haben, mit Dihydroxyverbindungen der Formel HO-A-OH, worin A die oben angegebenen allgemeinen und bevorzugten Bedeutungen hat, und einer oder mehrerer Monohydroxyverbindungen M-OH, worin M die oben angegebene Bedeutungen hat, oder durch Reaktion von Dihydroxyverbindungen der Formel HO-A-OH, worin A die oben angegebenen allgemeinen und bevorzugten Bedeutungen hat, mit Phosphoroxychlorid $POCl_3$ und einer oder mehreren Monohydroxyverbindungen M-OH, worin M für einen Rest $R^1$, $R^2$, $R^3$ oder $R^4$ steht, und $R^1$, $R^2$, $R^3$ und $R^4$ die oben angegebenen allgemeinen und bevorzugten Bedeutungen haben, oder durch Reaktion eines oder mehrerer Trialkylphosphate $(MO)_3PO$, worin M die oben angegebene Bedeutung hat, mit Phosphorpentoxid $P_2O_5$ und einem cyclischen Ether.

Erfindungsgemäß bevorzugt ist die Herstellung durch Reaktion von Dihydroxyverbindungen HO-A-OH, worin A die oben angegebenen allgemeinen und bevorzugten Bedeutungen hat, mit Phosphoroxychlorid $POCl_3$ und mindestens einer Monohydroxyverbindung M-OH, worin M für einen Rest $R^1$, $R^2$, $R^3$ oder $R^4$ steht, und $R^1$, $R^2$, $R^3$ und $R^4$ die oben angegebenen allgemeinen und bevorzugten Bedeutungen haben.

Weiterer Gegenstand der vorliegenden Erfindung ist ein Verfahren zur Herstellung der erfindungsgemäßen Oligomerenmischungen das dadurch gekennzeichnet ist, dass in einer ersten Stufe eine Dihydroxyverbindung der Formel HO-A-OH, worin A die oben angegebenen allgemeinen und bevorzugten Bedeutungen hat, mit Phosphoroxychlorid $POCl_3$ umsetzt, wobei pro Mol an Dihydroxyverbindung der Formel HO-A-OH mehr als 1,0 Mol und weniger als 2,0 Mol an $POCl_3$ eingesetzt wird, und die so erhaltene Mischung von oligomeren Chlorphosphaten der Formel (VIII)

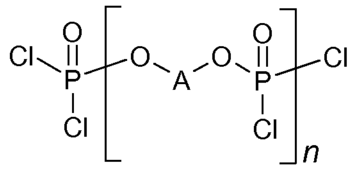

(VIII),

worin n für eine ganze Zahl von 0 bis 100 steht, in einer zweiten Stufe mit mindestens einer Monohydroxyverbindung der Formel

M-OH (IX),

worin M für einen Rest $R^1$, $R^2$, $R^3$ oder $R^4$ steht, und

$R^1$, $R^2$, $R^3$ und $R^4$ die oben angegebenen allgemeinen und bevorzugten Bedeutungen haben,

weiter zu den erfindungsgemäßen Oligomerenmischungen umsetzt.

Die zur Herstellung der erfindungsgemäßen Oligomerenmischungen eingesetzten Monohydroxyverbindungen der Formel (IX) können gleich oder unterschiedlich sein.

Bevorzugt werden zur Herstellung der erfindungsgemäßen Oligomerenmischungen pro Mol an Dihydroxyverbindung der Formel HO-A-OH 1,45 bis 1,8 Mol an $POCl_3$ eingesetzt.

Das zur Herstellung der erfindungsgemäßen Oligomerenmischung mit einem Mittelwert der Anzahl der Repetiereinheiten n von größer als 1,10 und kleiner als 2,00 günstigste Molverhältnis, innerhalb des oben angegebenen Bereichs, von Dihydroxyverbindungen HO-A-OH zu Phosphoroxychlorid $POCl_3$ lässt sich durch Reihenversuche, wie sie dem Fachmann vertraut sind, einfach ermitteln.

Das erfindungsgemäße Verfahren kann in einem breiten Temperaturbereich durchgeführt werden. Im allgemeinen wird das erfindungsgemäße Verfahren im Temperaturbereich von 0 bis 100 °C durchgeführt. Bevorzugt wird in der ersten Stufe bei einer Temperatur von 5 bis 40 °C gearbeitet und in der zweiten Stufe im allgemeinen bei einer Temperatur von 5 bis 30 °C.

Das erfindungsgemäße Verfahren kann in einem weiten Druckbereich durchgeführt werden. Vorzugsweise wird die erste Stufe bei einem Druck von 10 bis 1000 mbar durchgeführt und die zweite Stufe bei Atmosphärendruck.

Bevorzugt handelt es sich bei den erfindungsgemäßen Oligomerenmischungen um bei Verarbeitungstemperatur flüssige Verbindungen. Unter der Verarbeitungstemperatur wird hierbei die Temperatur verstanden, bei der die Polyurethanrohstoffe den Dosier- und Mischaggregaten der Herstellanlagen zugeführt werden. In der Regel werden hier in Anhängigkeit der Viskositäten der Komponenten und Auslegung der Dosieraggregate Temperaturen zwischen 20 und 80 °C gewählt.

Bevorzugt weisen die erfindungsgemäßen Oligomerenmischungen bei 23 °C eine Viskosität von weniger als 1000 mPas auf. Besonders bevorzugt beträgt die Viskosität bei 23 °C weniger als 500 mPas.

Bevorzugt weisen die erfindungsgemäßen Oligomerenmischungen eine niedrige Flüchtigkeit auf.

Bevorzugt sind die erfindungsgemäßen Oligomerenmischungen gegenüber den anderen, zur Herstellung der

Polyurethanen eingesetzten Ausgangsstoffen, insbesondere gegenüber Isocyanaten, nicht reaktiv.

Die erfindungsgemäßen Oligomerenmischungen eignen sich zur Verwendung als Flammschutzmittel und zur Herstellung von Flammschutzmittel-Zubereitungen.

Gegenstand der vorliegenden Erfindung ist die Verwendung der erfindungsgemäßen Oligomerenmischungen als Flammschutzmittel.

Die erfindungsgemäßen Oligomerenmischungen können generell in allen dem Fachmann bekannten Anwendungen für Flammschutzmittel verwendet werden. Bevorzugt werden die erfindungsgemäßen Oligomerenmischungen als Flammschutzmittel für synthetische Polymere, wie Polyolefine, Polycarbonate, Styrol-basierte (Co-)Polymere, Polyamide, Polyester und Epoxidharze, für pflanzenbasierte Werkstoffe, wie Holz, Holz-Kunststoff-Komposite, Papier und Pappe, und für Werkstoffe tierischen Ursprungs, wie Leder, verwendet.

Gegenstand der vorliegenden Erfindung sind auch Flammschutzmittel-Zubereitungen enthaltend mindestens eine erfindungsgemäße Oligomerenmischung, mindestens ein weiteres Flammschutzmittel B) und gegebenenfalls ein oder mehrere Hilfsmittel C) ausgewählt aus der Gruppe bestehend aus Lösungsmitteln, Antioxidantien, Stabilisatoren und Farbstoffen.

Bevorzugt enthalten die erfindungsgemäßen Flammschutzmittel-Zubereitungen als weiteres Flammschutzmittel B) mindestens ein Flammschutzmittel ausgewählt aus der Gruppe bestehend aus Triethylphosphat, Triphenylphosphat, Diphenylkresylphosphat, Trikresylphosphat, isopropylierten oder butylierten Arylphosphaten, Bisphenol-A-bis(diphenylphosphat), Resorcin-bis(diphenylphosphat), Neopentylglycol-bis(diphenylphosphat), Tris(chlorisopropyl)phosphat, Tris(dichloropropyl)phosphat, Dimethyl-methanphosphonat, Diethylethanphosphonat, Dimethylpropanphosphonat, Diethylphosphinsäure-Derivaten und -Salzen, anderen oligomeren Phosphaten oder Phosphonaten, hydroxylgruppenhaltigen Phosphorverbindungen, 5,5-Dimethyl-1,3,2-Dioxa-phosphorinane-2-oxid-Derivaten, 9,10-Dihydro-9-oxa-10-phosphaphenanthren-10-oxid (DOPO) und seinen Derivaten, Ammoniumphosphat, Ammoniumpolyphosphat, Melaminphosphat, Melaminpolyphosphat, Melamin, Melamincyanurat, Alkylestern einer Tetrabrombenzoesäure, bromhaltigen Diolen hergestellt aus Tetrabromphthalsäureanhydrid, bromhaltigen Polyolen, bromhaltigen Diphenylethern, Aluminiumhydroxid, Boehmit, Magnesiumhydroxid, Blähgraphit und Tonmineralien.

Als Hilfsmittel C) kommen beispielsweise in Frage Lösungsmittel, wie z. B. Wasser oder Alkylester aliphatischer oder aromatischer Di- oder Tricarbonsäuren, Antioxidatien und Stabilisatoren, wie z. B. sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole, und Farbstoffe, wie z. B. Eisenoxidpignemte oder Ruße.

Gegenstand der vorliegenden Erfindung sind weiterhin auch flammwidrige Polyurethane enthaltend mindestens eine erfindungsgemäße Oligomerenmischung.

Die erfindungsgemäßen, flammgeschützten Polyurethane können hergestellt werden, indem man organische Polyisocyanate mit Verbindungen mit mindestens zwei gegenüber Isocyanaten reaktionsfähigen Wasserstoffatomen, gegebenenfalls mit üblichen Treibmitteln, Stabilisatoren, Aktivatoren und/oder weiteren üblichen Hilfs- und Zusatzstoffen und in Gegenwart von mindestens einer erfindungsgemäßen Oligomerenmischung umsetzt.

Die erfindungsgemäßen Oligomerenmischungen werden in einer Menge von 0,5 bis 30 Gewichtsteilen, bevorzugt 3 bis 25 Gewichtsteile, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Bei den erfindungsgemäßen Polyurethanen handelt es sich um duroplastische Polyurethane, Polyurethanschaumstoffe, Polyurethan-Elastomere, thermoplastische Polyurethane, Polyurethan-Beschichtungen und -Lacke, Polyurethan-Klebstoffe und -Bindemittel oder Polyurethan-Fasern.

In einer bevorzugten Ausführungsform der Erfindung handelt es sich bei den erfindungsgemäßen Polyurethanen um Polyurethanschaumstoffe.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 150 kg/m$^3$ auf. Besonders bevorzugt weisen sie Raumgewichte von 20 - 50 kg/m$^3$ auf.

Für die Herstellung der Schaumstoffe auf Isocyanatbasis werden folgende Ausgangskomponenten eingesetzt:

1. Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

2. Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399 g/mol. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.

3. Wasser und/oder leicht flüchtige organische Substanzen als Treibmittel, z. B. n-Pentan, i- Pentan, Cyclopentan, Aceton, halogenhaltige Alkane, wie Trichlormethan, Methylenchlorid oder Chlorfluoralkane, $CO_2$ und andere.

4. Gegebenenfalls werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäßen Oligomerenmischungen in den erfindungsgemäßen Polyurethanen

a) organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z. B. Tris(chlorisopropyl)phosphat oder Tris(dichloropropyl)phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, 5,5-Dimethyl-1,3,2-Dioxaphosphorinane-2-oxid-Derivate, 9,10-Dihydro-9-oxa-10-phosphaphenanthren-10-oxid (DOPO) und seine Derivate,

b) anorganische Phosphorverbindungen, wie beispielsweise Ammoniumphosphat, Ammoniumpolyphosphat, Melaminphosphat, Melaminpolyphosphat,

c) Stickstoffverbindungen, wie beispielsweise Melamin, Melamincyanurat,

d) Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether,

e) anorganische Flammschutzmittel, wie beispielsweise Aluminiumhydroxid, Boehmit, Magnesiumhydroxid, Blähgraphit oder Tonmineralien

enthalten sein.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Weiterer Gegenstand der vorliegenden Erfindung ist ein Verfahren zur Herstellung von flammwidrigen Polyurethanen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen in Gegenwart von mindestens einer erfindungsgemäßen Oligomerenmischung. Hierbei wird die erfindungsgemäße Oligomerenmischung im allgemeinen in einer Menge von 0,5 bis 30 Gewichtsteilen, bevorzugt in einer Menge von 3 bis 25 Gewichtsteilen, jeweils bezogen auf 100 Gewichtsteile Polyolkomponente, eingesetzt. Das Verfahren wird bevorzugt bei einer Temperatur von 20 bis 80 °C durchgeführt.

Zur Durchführung des Verfahrens zur Herstellung der erfindungsgemäßen Polyurethane werden die oben beschriebenen Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäss in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von flammgeschützten Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach dem erfindungsgemäßen Verfahren erhältlichen erfindungsgemäßen Polyurethane finden bevorzugt Anwendung in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

Die in den erfindungsgemäßen Polyurethanen enthaltenen beziehungsweise im erfindungsgemäßen Verfahren eingesetzten erfindungsgemäßen Oligomerenmischungen lassen sich, in Analogie zu bekannten Methoden, nach dem oben beschriebenen Verfahren herstellen. Besonders vorteilhaft ist dabei, dass sich erfindungsgemäße Oligomerenmischungen bestimmter Zusammensetzung durch geeignete Wahl der Synthesebedingungen als direkte Verfahrensprodukte erhalten lassen. Dabei kommen im industriellen Maßstab verfügbare Ausgangsmaterialien zum Einsatz, die die gewünschten Endprodukte einfach herzustellen erlauben.

Die flüssigen erfindungsgemäßen Oligomerenmischungen sind gut zu dosieren. Sie reagieren nicht mit den anderen zur Herstellung der Polyurethanschaumstoffe eingesetzten Ausgangsstoffen und sind daher als Additive sehr leicht zu verarbeiten. Überraschender Weise lassen sie sich sowohl mit Polyetherpolyolen als auch mit Polyesterpolyolen verarbeiten. Die mit den erfindungsgemäßen Oligomerenmischungen hergestellten Schaumstoffe entsprechen nicht nur den Anforderungen an Flammwidrigkeit, sondern zeigen auch besonders niedrige Foggingwerte.

Anhand der nachfolgenden Beispiele wird die Erfindung näher erläutert, ohne dass dadurch eine Einschränkung

der Erfindung bewirkt werden soll.

Beispiele

Allgemeine Synthesevorschrift für die Oligomerenmischungen (Synthesebeispiele **S1** bis S5)

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf 10 - 20 °C temperiert. Bei einem Vakuum von 500 - 700 mbar wurde die in der Tabelle 1 angegebene Menge Diethylenglycol zugetropft. Nach Ende des Zutropfens wurde der Druck weiter bis auf schließlich 5 - 15 mbar abgesenkt und die Temperatur auf 20 - 30 °C angehoben. Ein nahezu farbloser, flüssiger Rückstand verblieb.

In einem weiteren Reaktor mit Rührer, Tropftrichter und Rückflusskühler wurde bei 20 - 30 °C die in Tabelle 1 angegebenen Menge Ethanol vorgelegt und mit dem oben erhaltenen Rückstand versetzt. Die Mischung wurde weiter bei 20 - 30 °C bis zum Abklingen der Reaktion gerührt, und dann durch Zugabe von konzentrierter Natronlauge neutralisiert. Daraufhin wurde soviel Dichlormethan und Wasser zugefügt, dass zwei klare flüssige Phasen entstanden. Diese wurden getrennt und die organische Phase durch Destillation vom Dichlormethan, überschüssigem Ethanol und Wasser befreit. Als Rückstand verblieben die erfindungsgemäßen Oligomerenmischungen in Form farbloser Flüssigkeiten. Die Viskositäten der hergestellten Produkte wurden mit einem handelsüblichen Kugelfall-Viskosimeter bei 23 °C bestimmt und in Tabelle 1 aufgelistet.

Bestimmung des Mittelwerts der Anzahl der Repetiereinheiten $\overline{n}$ der in der Oligomerenmischung enthaltenen Moleküle entsprechend der Formel I

Die hergestellten Produkte erwiesen sich nach Analyse durch Gelpermeationschromatographie (GPC) als Oligomerenmischungen. Die zahlenmittleren Molmassen $M_n$ der Oligomerenmischungen wurden durch GPC mit Tetrahydrofuran als Elutionsmittel gegen Polystyrolstandards in Anlehnung an die Methode aus DIN 55672-1:2007-08 bestimmt. Der Mittelwert der Anzahl der Repetiereinheiten n der in einer Oligomerenmischung enthaltenen Poly(alkylenphosphate) entsprechend der Formel (I) wurde aus der gemessenen zahlenmittleren Molmasse $M_n$ nach folgender Formel berechnet:

$$\overline{n} = (M_n - M_E)/M_R$$

n : Mittelwert der Anzahl der Repetiereinheiten der in der Oligomerenmischung enthaltenen Poly(alkylenphosphate) der Formel (I),

$M_n$: zahlenmittlere Molmasse in g/mol durch Gelpermeationschromatographie bestimmt,

$M_E$: Summe der Molmassen der Endgruppen in g/mol und

$M_R$: Molmasse der Repetiereinheit in g/mol.

Für die Oligomerenmischungen aus Poly(alkylenphosphaten) der Formel (I) mit $R^1 = R^2 = R^3 = R^4$ = Ethyl und A = $-CH_2CH_2OCH_2CH_2-$ gilt $M_E$ = 182,16 g/mol und $M_R$ = 194,14 g/mol. Die Ergebnisse sind in Tabelle 1 aufgelistet.

Tabelle 1: Verwendete Rohstoffe und Gewichtsteile zur Herstellung von Oligomerenmischungen aus Poly(alkylenphosphaten) der Formel (I) mit $R^1$ = **$R^2$ = $R^3$ = $R^4$ = Ethyl und A = $-CH_2CH_2OCH_2CH_2-$ der Synthesebeispiele S1 bis S5 und Eigenschaften**

| **Beispiel** | **S1** | **S2** | **S3** | **S4** | **S5** |
|---|---|---|---|---|---|
| Diethylenglykol | 235,3 | 428,2 | 466,4 | 118,7 | 118,7 |
| Phosphoroxychlorid | 476,9 | 736,0 | 1214 | 306,7 | 269,9 |
| Ethanol | 1225 | 2230 | 2428 | 618,2 | 618,2 |
| Viskosität [mPas] | 190 | 1423 | 40 | 58 | 85 |
| $M_n$ | 592 | 655 | 429 | 462 | 495 |

(fortgesetzt)

| Beispiel | S1 | S2 | S3 | S4 | S5 |
|---|---|---|---|---|---|
| $\bar{n}$ | 2,11 | 2,44 | 1,27 | 1,44 | 1,61 |
| Erfindungsgemäß | nein | nein | ja | ja | ja |

## Herstellung von Polyurethanweichschaumstoffen

**Tabelle 2: Verwendete Rohstoffe zur Herstellung von Polyether-Weichschaumstoffen für die Zusammensetzungen der erfindungsgemäßen Beispiele B1, B2 und B3 sowie der nicht erfindungsgemäßen Vergleichsbeispiele VI bis V6 (gemäß Tabelle 4)**

| Komponente | Funktion | Beschreibung |
|---|---|---|
| A | Polyol | Arcol® 1105 (Bayer MaterialScience), Polyetherpolyol mit OHZ 56 mg KOH/g |
| B | Treibmittel | Wasser |
| C | Katalysator | Addocat 108® (Rhein Chemie), 70 %ige Lösung von Bis(2-dimethylaminoethyl)ether in Dipropylenglykol |
| D | Katalysator | Addocat® SO (Rhein Chemie), Zinn-II-2-ethylhexanoat |
| E | Stabilisator | Tegostab® B 8232 (Degussa), Siliconstabilisator |
| F1 | Flammschutzmittel | Tris(2,3-dichlorisopropyl)phosphat, TDCP |
| F2 | Flammschutzmittel | Diphenylkresylphosphat |
| F3 | Flammschutzmittel | Diethylenglykol-bis(diethylphosphat) gemäß EP 1 746 129 A1 |
| F4 | Flammschutzmittel | Fyrol® PNX der ICL-IP (oligomerer Phosphatester der Formel I mit $R^1 = R^2 = R^3 = R^4$ = Ethyl und A = Ethylen, CAS Reg.-No 184538-58-7), $M_n$ = 640 g/mol aus GCP (s.o.), unter Berücksichtigung von Formel (I) ist n = 3,01; Viskosität 1241 mPas bei 23 °C. |
| F5 | Flammschutzmittel | Produkt aus Synthesebeispiel S1, nicht erfindungsgemäß |
| F7 | Flammschutzmittel | Produkt aus Synthesebeispiel S3, erfindungsgemäß |
| F8 | Flammschutzmittel | Produkt aus Synthesebeispiel S4, erfindungsgemäß |
| F9 | Flammschutzmittel | Produkt aus Synthesebeispiel S5, erfindungsgemäß |
| G | Diisocyanat | Desmodur® T 80 (Bayer MaterialScience), Toluylendiisocyanat, Isomerenmischung |

## Herstellung von Polyether-Weichschaumstoffen

Die Rohstoffe zur Herstellung von Polyether-Weichschaumstoffen sind in Tabelle 2 angegeben. Die in Tabelle 4 nach Art und Menge angegebenen Komponenten mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 170 - 200 s wurde ein Polyurethanweichschaumstoff mit einem Raumgewicht von 33 kg/$m^3$ erhalten. Bei allen Versuchen wurden gleichmäßig feinporige Schaumstoffe erhalten.

**Tabelle 3: Verwendete Rohstoffe zur Herstellung von Polyester-Weichschaumstoffen für die Zusammensetzungen der erfindungsgemäßen Beispiele B4, B5 und B6 sowie der nicht erfindunsgemäßen Vergleichsbeispiele V7 bis V13 (gemäß Tabelle 5)**

| Komponente | Funktion | Beschreibung |
|---|---|---|
| A | Polyol | Desmophen® 2200 B (Bayer MaterialScience), Polyesterpolyol mit OHZ 60 mg KOH/g |
| B | Treibmittel | Wasser |
| C | Katalysator | Niax® A-30(Momentive), Amin |
| D | Katalysator | Addocat® 117 (Rhein Chemie), Tertiäres Amin |
| E | Stabilisator | Tegostab® B 8324 (Degussa), Siliconstabilisator |
| F1 | Flammschutzmittel | Tris(2,3-dichlorisopropyl)phosphat, TDCP, CAS Reg.-No. 13674-87-8 |
| F2 | Flammschutzmittel | Diphenylkresylphosphat, CAS Reg.-No. 26444-49-5 |
| F3 | Flammschutzmittel | Diethylenglykol-bis(diethylphosphat) gemäß EP 1 746 129 A1 |
| F4 | Flammschutzmittel | Fyrol® PNX der ICL-IP (oligomerer Phosphatester der Formel I mit $R^1 = R^2 = R^3 = R^4$ = Ethyl und A = Ethylen, CAS Reg.-No 184538-58-7), $M_n$ = 640 g/mol aus GCP (s.o.), unter Berücksichtigung von Formel (I) ist n = 3,01; Viskosität 1241 mPas bei 23 °C. |
| F5 | Flammschutzmittel | Produkt aus Synthesebeispiel S1 |
| F6 | Flammschutzmittel | Produkt aus Synthesebeispiel S2 |
| F7 | Flammschutzmittel | Produkt aus Synthesebeispiel S3, erfindungsgemäß |
| F8 | Flammschutzmittel | Produkt aus Synthesebeispiel S4, erfindungsgemäß |
| F9 | Flammschutzmittel | Produkt aus Synthesebeispiel S5, erfindungsgemäß |
| G | Diisocyanat | Desmodur® T 80 (Bayer MaterialScience), Toluylendiisocyanat, Isomerenmischung |
| H | Diisocyanat | Desmodur® T 65 (Bayer MaterialScience), |
| | | Toluylendiisocyanat, Isomerenmischung |

**Herstellung von Polyester-Weichschaumstoffen**

Die Rohstoffe zur Herstellung von Polyester-Weichschaumstoffen sind in Tabelle 3 angegeben. Die in Tabelle 5 nach Art und Menge angegebenen Komponenten mit Ausnahme der beiden Diisocyanate (Komponente G und H) wurden zu einer homogenen Mischung verrührt. Dann wurden die beiden vorgemischten Diisocyanate zugefügt und kurz intensiv untergerührt. Nach einer Startzeit von 10 - 15 s und einer Steigzeit von 80 - 90 s wurde ein Polyurethanweichschaumstoff mit einem Raumgewicht von 29 kg/$m^3$ erhalten. Die Schaumstruktur der Polyester-Weichschaumstoffe hing von den verwendeten Flammschutzmitteln ab. Sie ist in Tabelle 5 als "gleichmäßig feinporig" ("gf") oder "ungleichmäßig grobporig" ("ug") protokolliert.

**Prüfergebnisse zu Polyurethanweichschaumstoffen**

- **Bestimmung der Flammwidrigkeit**

Die Polyurethanweichschaumstoffe wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jedes Beispiel fünfmal durchgeführt. Das schlechteste Ergebnis jeder Fünferreihe wurde in Tabelle 4 bzw. Tabelle 5 wiedergegeben.

**- Bestimmung des Foggings**

Das Foggingverhalten der Polyurethanweichschaumstoffe wurde gemäß DIN 75201 B untersucht. Die gemessenen Kondensatmengen nach Lagerung von 16 h bei 100 °C sind in Tabelle 4 wiedergegeben.

**Tabelle 4: Zusammensetzung (Gewichtsteile) und Prüfergebnisse der erfindungsgemäßen Beispiele B1 bis B3 und der nicht erfindunsgemäßen Vergleichsbeispiele V1 bis V6 zu Polyether-Weichschaumstoffen**

| Beispiel | V1 | V2 | V3 | V4 | V5 | V6 | B1 | B2 | B3 |
|---|---|---|---|---|---|---|---|---|---|
| A | 100 | 100 | 100 | 100 | 100 | 100 | 100 | 100 | 100 |
| B | 3,0 | 3,0 | 3,0 | 3,0 | 3,0 | 3,0 | 3,0 | 3,0 | 3,0 |
| C | 0,08 | 0,08 | 0,08 | 0,08 | 0,08 | 0,08 | 0,08 | 0,08 | 0,08 |
| D | 0,16 | 0,16 | 0,16 | 0,16 | 0,16 | 0,16 | 0,16 | 0,16 | 0,16 |
| E | 0,80 | 0,80 | 0,80 | 0,80 | 0,80 | 0,80 | 0,80 | 0,80 | 0,80 |
| F1 | | 6 | | | | | | | |
| F2 | | | 6 | | | | | | |
| F3 | | | | 6 | | | | | |
| F4 | | | | | 6 | | | | |
| F5 | | | | | | 6 | | | |
| F7 | | | | | | | 6 | | |
| F8 | | | | | | | | 6 | |
| F9 | | | | | | | | | 6 |
| G | 40,9 | 40,9 | 40,9 | 40,9 | 40,9 | 40,9 | 40,9 | 40,9 | 40,9 |
| FMVSS-Klasse | RB | SE | BR | SE | SE | SE | SE | SE | SE |
| Fogging-Kondensat [mg] gemäß DIN 75201 B | 0,19 | 0,72 | 0,59 | 0,37 | 0,33 | 0,21 | 0,32 | 0,31 | 0,28 |

**Auswertung der Ergebnisse zu Polyether-Weichschaumstoffen**

In Abwesenheit eines Flammschutzmittels (Vergleichsbeispiel V1) brennt der Polyurethanweichschaumstoff rasch ab (FMVSS-Brandklasse RB), zeigt aber einen sehr niedrigen Foggingwert. Ein Schaumstoff mit Tris(dichlorisopropyl)phosphat (Vergleichsbeispiel V2) zeigt einen substanziellen Foggingbeitrag des Flammschutzmitteladditivs und kann die beste FMVSS-Brandklasse SE (selbsterlöschend) in allen Wiederholungen des Brandversuchs erreichen. Tris(dichlorisopropyl)phosphat bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V3) wird dieses Problem zwar umgangen und auch ein niedriger Foggingwert erreicht, aber die Flammschutzwirkung ist mit der FMVSS-Brandklasse BR unzureichend. Die in den Vergleichsbeispielen V4 bis V6 eingesetzten Flammschutzmittel weisen eine sehr gute Flammschutzwirkung (alle selbsterlöschend) auf und ergeben noch niedrigere Foggingwerte.

Die Beispiele B1 bis B3 zeigen, dass die erfindungsgemäßen Polyurethanweichschaumstoffe ebenfalls die beste Brandklasse SE (selbsterlöschend) in allen Wiederholungen des Brandversuchs erreichen und sich durch die niedrigsten Foggingwerte auszeichnen. Insbesondere ist das Fogging bei B1 bis B3 niedriger als im Vergleichsbeispiel V4, in welchem das Flammschutzmittel Diethylenglykol-bis(diethylphosphat) (F3) verarbeitet wurde. F3 ist strukturell den erfindungsgemäßen Oligomerenmischungen verwandt, es entspricht Formel II mit $R^1 = R^2 = R^3 = R^4$ = Ethyl und A = $-CH_2CH_2OCH_2CH_2-$und $\bar{n}$ = 1,00.

**Tabelle 5: Zusammensetzung (Gewichtsteile) und Prüfergebnisse der erfindungsgemäßen Beispiele B4 bis B6 und der nicht erfindunsgemäßen Vergleichsbeispiele V7 bis V13 zu Polyester-Weichschaumstoffen**

| Beispiel | V7 | V8 | V9 | V10 | V11 | V12 | V13 | B4 | B5 | B6 |
|---|---|---|---|---|---|---|---|---|---|---|
| A | 100 | 100 | 100 | 100 | 100 | 100 | 100 | 100 | 100 | 100 |
| B | 4,0 | 4,0 | 4,0 | 4,0 | 4,0 | 4,0 | 4,0 | 4,0 | 4,0 | 4,0 |
| C | 0,25 | 0,25 | 0,25 | 0,25 | 0,25 | 0,25 | 0,25 | 0,25 | 0,25 | 0,25 |
| D | 0,25 | 0,25 | 0,25 | 0,25 | 0,25 | 0,25 | 0,25 | 0,25 | 0,25 | 0,25 |
| E | 1,0 | 1,0 | 1,0 | 1,0 | 1,0 | 1,0 | 1,0 | 1,0 | 1,0 | 1,0 |
| F1 | | 4 | | | | | | | | |
| F2 | | | 4 | | | | | | | |
| F3 | | | | 4 | | | | | | |
| F4 | | | | | 4 | | | | | |
| F5 | | | | | | 4 | | | | |
| F6 | | | | | | | 4 | | | |
| F7 | | | | | | | | 4 | | |
| F8 | | | | | | | | | 4 | |
| F9 | | | | | | | | | | 4 |
| G | 24,1 | 24,1 | 24,1 | 24,1 | 24,1 | 24,1 | 24,1 | 24,1 | 24,1 | 24,1 |
| H | 24,1 | 24,1 | 24,1 | 24,1 | 24,1 | 24,1 | 24,1 | 24,1 | 24,1 | 24,1 |
| Schaumstruktur | gf | gf | gf | gf | ug | ug | ug | gf | gf | gf |
| FMVSS-Klasse | RB | SE | BR | SE | - | - | - | SE | SE | SE |

**Auswertung der Ergebnisse zu Polyester-Weichschaumstoffen**

In Abwesenheit eines Flammschutzmittels (Vergleichsbeispiel V7) brennt der Polyurethanweichschaumstoff rasch ab (FMVSS-Brandklasse RB). Ein Schaumstoff mit Tris(dichlorisopropyl)phosphat (Vergleichsbeispiel V8) erreicht die beste FMVSS-Brandklasse SE (selbsterlöschend) in allen Wiederholungen des Brandversuchs. Tris(dichlorisopropyl)phosphat bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V9) wird dieses Problem zwar umgangen, aber die Flammschutzwirkung ist mit der FMVSS-Brandklasse BR unzureichend. Das Vergleichsbeispiel V10 erreicht ebenfalls die beste Klassifizierung im Brandversuch. Die Flammschutzmittel F4 ($\bar{n}$ = 3,01), F5 ($\bar{n}$ = 2,11) und F6 ($\bar{n}$ = 2,44) (Vergleichsbeispiele V11 bis V13) erwiesen sich als unverträglich mit den Polyester-Polyolen. Diese Unverträglichkeiten zeigte sich an den Polyester-Weichschaumstoffen in einer ungleichmäßigen, grobporigen Schaumstruktur. Derartige Schaustoffe sind für die typischen Weichschaumanwendungen unbrauchbar. Aus diesem Grund wurden für die Vergleichsbeispiele V11 bis V13 auch keine FMVSS-Klassen bestimmt.

Die Beispiele B4 bis B6 zeigen, dass sich die erfindungsgemäßen Oligomerenmischungen auch mit Polyesterpolyolen problemlos zu Polyurethanweichschaumstoffen verarbeiten lassen und diese ebenfalls die beste Brandklasse SE (selbsterlöschend) in allen Wiederholungen des Brandversuchs erreichen.

Vergleicht man die Ergebnisse aus Polyether- und Polyester-Weichschaumstoffen, so zeigt sich, dass sich mit den erfindungsgemäßen Oligomerenmischungen sowohl Polyether- als auch Polyester-Weichschaumstoffe herstellen lassen, die zugleich eine sehr gute Flammwidrigkeit und niedrige Foggingwerte aufweisen. Diese Kombination von Eigenschaften weist keines der Vergleichsprodukte auf.

## Patentansprüche

1. Oligomerenmischung **dadurch gekennzeichnet, dass** sie mindestens drei Poly(alkylenphosphate) der Formel (I) enthält,

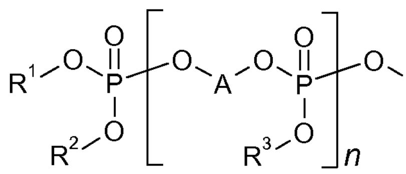

(I),

worin

$R^1$, $R^2$, $R^3$ und $R^4$ unabhängig voneinander jeweils für einen geradkettigen oder verzweigten $C_1$- bis $C_8$-Alkylrest oder für einen geradkettigen oder verzweigten $C_1$- bis $C_4$-Alkoxyethylrest stehen,
A für einen geradkettigen, verzweigten und/oder cyclischen $C_4$- bis $C_{20}$-Alkylenrest steht, oder
A für einen Rest der Formel $-CH_2-CH=CH-CH_2-$, einen Rest der Formel $-CH_2-C\equiv C-CH2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$ oder für einen Rest der Formel $-(CHR^5-CHR^6-O)_c-R^9-(O-CHR^7-CHR^8)_d-$ steht,

worin

a für eine ganze Zahl von 1 bis 5 steht,
b für eine ganze Zahl von 0 bis 2 steht,
c und d unabhängig voneinander für eine ganze Zahl von 1 bis 5 stehen,
$R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

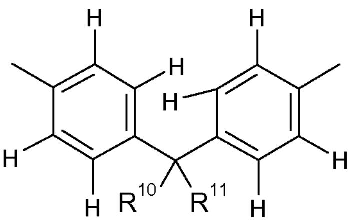

(II),

einen Rest der Formel (III)

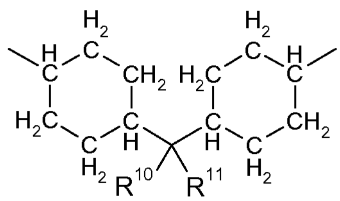

(III),

einen Rest der Formel (IV)

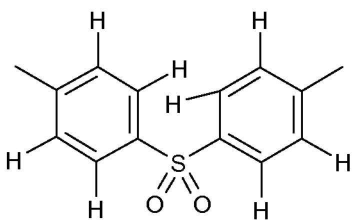

(IV),

oder einen Rest der Formel $-C(=O)-R^{12}-C(=O)-$ steht,
wobei

$R^{10}$ und $R^{11}$ unabhängig voneinander jeweils für H oder $C_1$- bis $C_4$-Alkyl stehen oder $R^{10}$ und $R^{11}$ zusammen für einen gegebenenfalls alkylsubstituierten Ring mit 4 bis 8 C-Atomen stehen,
$R^{12}$ für einen geradkettigen, verzweigten und/oder cyclischen $C_2$- bis $C_8$-Alkylenrest, einen 1,2-Phenylenrest, einen 1,3-Phenylenrest, oder einen 1,4-Phenylenrest stehen,
und
*n* für eine ganze Zahl von 0 bis 100 steht,
mit der Maßgabe, dass sich die mindestens drei Poly(alkylenphosphate) der Formel (I) mindestens in der Anzahl *n* der Repetiereinheiten voneinander unterscheiden, und der Mittelwert der Anzahl der Repetiereinheiten n der mindestens drei Poly(alkylenphosphate) der Formel (I) größer als 1,10 und kleiner als 2,00 ist.

2. Oligomerenmischung gemäß Anspruch 1, **dadurch gekennzeichnet dass** in Formel (I)
$R^1$, $R^2$, $R^3$ und $R^4$ gleich sind und für Ethyl, n-Propyl, iso-Propyl, n-Butyl, iso-Butyl oder n-Butoxyethyl stehen,
A für einen geradkettigen $C_4$- bis $C_6$-Alkylenrest steht, oder
A für einen Rest der Formeln

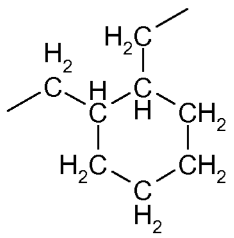
(V)

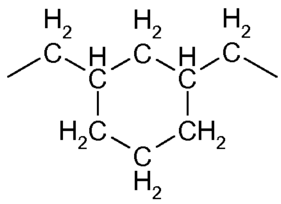
(VI)

oder

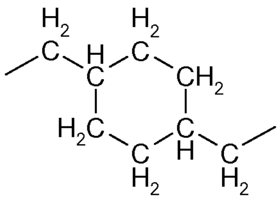
(VII)

steht, oder

A für einen Rest $-CHR^5-CHR^6-(O-CHR^7-CHR^8)_a-$ steht, worin a eine ganze Zahl von 1 bis 2 ist und $R^5$, $R^6$, $R^7$ und $R^8$ gleich sind und für H stehen, oder für einen Rest $-(CHR^5-CHR^6-O)_c-R^9-(O-CHR^7-CHR^8)_d-$, worin c und d unabhängig voneinander für eine ganze Zahl von 1 bis 2 stehen, $R^5$, $R^6$, $R^7$ und

$R^8$ gleich sind und für H stehen, $R^9$ für einen Rest der Formel (II) steht, wobei
$R^{10}$ und $R^{11}$ gleich sind und für Methyl stehen,

und
*n* für eine ganze Zahl von 0 bis 20 steht.

3. Oligomerenmischung gemäß Anspruch 1 und 2, **dadurch gekennzeichnet, dass** der Mittelwert der Anzahl der Repetiereinheiten n größer als 1,20 und kleiner als 1,90 ist.

4. Oligomerenmischung gemäß wenigstens einem der Ansprüche 1 bis 3, **dadurch gekennzeichnet, dass** sie halogenfrei ist.

5. Oligomerenmischung nach wenigstens einem der Ansprüche 1 bis 4, **dadurch gekennzeichnet, dass** sie eine dynamischen Viskosität von 20 bis 1000 mPas bei 23 °C auf weist.

6. Verfahren zur Herstellung einer Oligomerenmischung gemäß wenigstens einem der Ansprüche 1 bis 5, **dadurch gekennzeichnet, dass** in einer ersten Stufe eine Dihydroxyverbindung der Formel HO-A-OH, worin A die in Anspruch

1 angegebene Bedeutungen hat, mit Phosphoroxychlorid $POCl_3$ umgesetzt wird, wobei pro Mol Phosphoroxychlorid mehr als 1,0 Mol und weniger als 2,0 Mol an Dihydroxyverbindung der Formel HO-A-OH eingesetzt wird, und die so erhaltene Mischung von oligomeren Chlorphosphaten der Formel (VIII)

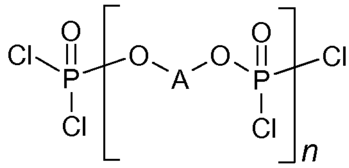

(VIII),

worin n für eine ganze Zahl von 0 bis 100 steht,
in einer zweiten Stufe mit mindestens einer Monohydroxyverbindung der Formel

M-OH (IX),

worin M für $R^1$, $R^2$, $R^3$ oder $R^4$ steht, und
$R^1$, $R^2$, $R^3$ und $R^4$ die in Anspruch 1 angegebene Bedeutungen haben, umgesetzt wird.

7. Verwendung einer Oligomerenmischung gemäß wenigstens einem der Ansprüche 1 bis 5 als Flammschutzmittel.

8. Flammschutzmittel-Zubereitungen enthaltend mindestens eine Oligomerenmischung gemäß wenigstens einem der Ansprüche 1 bis 5, ein oder mehrere, von der Oligomerenmischung verschiedene Flammschutzmittel B) und gegebenenfalls ein oder mehrere Hilfsmittel C).

9. Flammschutzmittel-Zubereitung gemäß Anspruch 8, **dadurch gekennzeichnet, dass** das Flammschutzmittel B) ausgewählt ist aus der Gruppe Triethylphosphat, Triphenylphosphat, Diphenylkresylphosphat, Trikresylphosphat, isopropylierte oder butylierte Arylphosphate, Bisphenol-A-bis(diphenylphosphat), Resorcin-bis(diphenylphosphat), Neopentylglycol-bis(diphenylphosphat), Tris(chlorisopropyl)-phosphat, Tris(dichloropropyl)phosphat, Dimethyl-methanphosphonat, Diethylethanphosphonat, Dimethylpropanphosphonat, Diethylphosphinsäure-Derivate und -Salze, oligomere Phosphate oder Phosphonate, hydroxylgruppenhaltige Phosphorverbindungen, 5,5-Dimethyl-1,3,2-Dioxaphosphorinan-2-oxid-Derivate, 9,10-Dihydro-9-oxa-10-phosphaphenanthren-10-oxid (DOPO) und seine Derivate, Ammoniumphosphat, Ammoniumpolyphosphat, Melaminphosphat, Melaminpolyphosphat, Melamin, Melamincyanurat, Alkylester einer Tetrabrombenzoesäure, bromhaltige Diole hergestellt aus Tetrabromphthalsäureanhydrid, bromhaltige Polyole, bromhaltige Diphenylether, Aluminiumhydroxid, Boehmit, Magnesiumhydroxid, Blähgraphit und Tonmineralien.

10. Flammwidrig ausgerüstet Polyurethane, **dadurch gekennzeichnet, dass** sie mindestens eine Oligomerenmischung gemäß wenigstens einem der Ansprüche 1 bis 5 enthalten.

11. Polyurethane gemäß Anspruch 10, **dadurch gekennzeichnet, dass** sich um Polyurethanschaumstoffe handelt, bevorzugt basierend auf Polyether-Polyolen oder auf Polyester-Polyolen.

12. Verfahren zur Herstellung von flammwidrig ausgerüsteten Polyurethanen gemäß Anspruch 10, **dadurch gekennzeichnet, dass** mindestens ein organisches Polyisocyanat mit mindestens einer Verbindung, die über mindestens zwei gegenüber Isocyanaten reaktionsfähigen Wasserstoffatomen verfügt, in Gegenwart von mindestens einer Oligomerenmischung gemäß wenigstens einem der Ansprüche 1 bis 5 umgesetzt wird, gegebenenfalls in Gegenwart von einer oder mehreren Verbindungen ausgewählt aus der Reihe der Treibmittel, Stabilisatoren, Katalysatoren, Aktivatoren, Hilfs- und Zusatzstoffe.

13. Verfahren nach Anspruch 12, **dadurch gekennzeichnet, dass** auf 100 Gewichtsteile an Verbindung, die über mindestens zwei gegenüber Isocyanaten reaktionsfähigen Wasserstoffatomen verfügt, 3 bis 25 Gewichtsteile an Oligomerenmischung eingesetzt wird.

14. Verfahren gemäß Ansprüchen 12 und 13, **dadurch gekennzeichnet, dass** als Verbindung, die über mindestens zwei gegenüber Isocyanaten reaktionsfähigen Wasserstoffatomen verfügt, ein Polyether-Polyol verwendet wird.

**15.** Verfahren gemäß Ansprüchen 12 und 13, **dadurch gekennzeichnet, dass** als Verbindung, die über mindestens zwei gegenüber Isocyanaten reaktionsfähigen Wasserstoffatomen verfügt, ein Polyester-Polyol verwendet wird.

**16.** Formteile, Lacke, Klebstoffe, Beschichtungen, Haftvermittler und Fasern auf Basis von Polyurethanen gemäß wenigstens einem der Ansprüche 10 und 11.

**17.** Verwendung der Polyurethane gemäß wenigstens einem der Ansprüche 10 und 11 als Bestandteil in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

## Claims

**1.** Oligomer mixture **characterized in that** it comprises at least three poly (alkylene phosphates) of the formula (I),

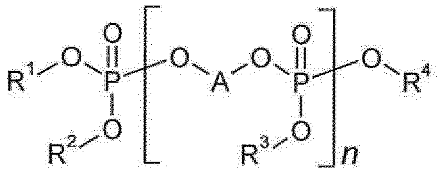

(I),

in which

$R^1$, $R^2$, $R^3$ and $R^{11}$ mutually independently respectively are a straight-chain or branched $C_1$-$C_8$-alkyl moiety or a straight-chain or branched $C_1$-$C_4$-alkoxyethyl moiety,
A is a straight-chain, branched and/or cyclic $C_4$-$C_{20}$-alkylene moiety, or
A is a moiety of the formula $-CH_2-CH=CH-CH_2-$, a moiety of the formula $-CH_2-C\equiv C-CH_2-$, a moiety of the formula $-CHR^5-CHR^6-(O-CHR^7-CHR^8)_a-$, a moiety of the formula $-CHR^5-CHR^6-S(O)_b-CHR^7-CHR^8-$ or a moiety of the formula $-(CHR^5-CHR^6-O)_c-R^9-(O-CHR^7-CHR^8)_d-$,
in which

a is an integer from 1 to 5,
b is an integer from 0 to 2,
c and d are mutually independently an integer from 1 to 5,
$R^5$, $R^6$, $R^7$ and $R^8$ are mutually independently H or methyl,
$R^9$ is a moiety of the formula $-CH_2-CH=CH-CH_2-$, a moiety of the formula $-CH_2-C\equiv C-CH_2-$, a 1, 2-phenylene moiety, a 1,3-phenylene moiety, a 1,4-phenylene moiety, or a moiety of the formula (II)

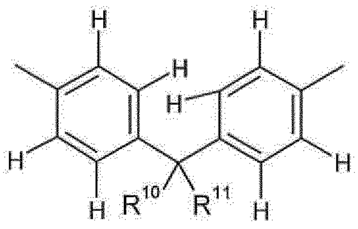

(II),

a moiety of the formula (III)

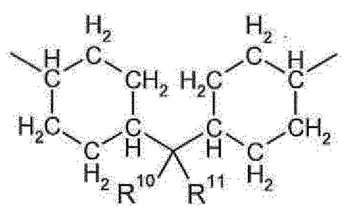

(III),

a moiety of the formula (IV)

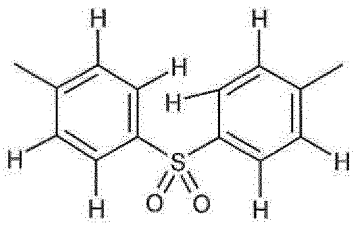

(IV),

or a moiety of the formula -C (=O) -$R^{12}$-C (=O)-,
where

$R_{10}$ and $R^{11}$ are mutually independently respectively H or $C_1$-$C_4$-alkyl or $R^{10}$ and $R^{11}$ together are an optionally alkyl-substituted ring having from 4 to 8 carbon atoms,
$R^{12}$ is a straight-chain, branched and/or cyclic $C_2$-$C_8$-alkylene moiety, a 1,2-phenylene moiety, a 1,3-phenylene moiety, or a 1,4-phenylene moiety,
and
n is an integer from 0 to 100,

with the proviso that the at least three poly(alkylene phosphates) of the formula (I) differ from one another at least in the number n of the repeating units, and the average number of the repeating units $\bar{n}$ of the at least three poly (alkylene phosphates) of the formula (I) is greater than 1.10 and smaller than 2.00.

**2.** Oligomer mixture according to Claim 1, **characterized in that** in formula (I)

$R^1$, $R^2$, $R^3$ and $R^4$ are identical and are ethyl, n-propyl, isopropyl, n-butyl, isobutyl or n-butoxyethyl,
A is a straight-chain $C_4$-$C_6$-alkylene moiety, or
A is a moiety of the formulae

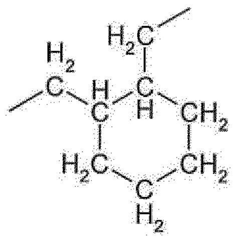

(V)

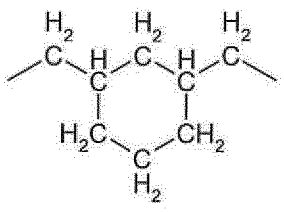

(VI)

or

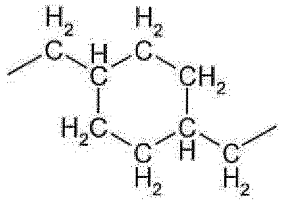

(VII)

or

A is a moiety -$CHR^5$-$CHR^6$-(O-$CHR^7$-$CHR^8$)$_a$-, in which a is an integer from 1 to 2 and $R^5$, $R^6$, $R^7$ and $R^8$ are identical and are H, or a moiety -($CHR^5$-$CHR^6$-O)$_c$-$R^9$- (O-$CHR^7$-$CHR^8$)$_d$-, in which c and d are mutually independently an integer from 1 to 2, $R^5$, $R^6$, $R^7$ and $R^8$ are identical and are H, $R^9$ is a moiety of the formula (II), where $R^{10}$ and $R^{11}$ are identical and are methyl, and

*n* is an integer from 0 to 20.

**3.** Oligomer mixture according to Claim 1 and 2, **characterized in that** the average number of the repeating units $\bar{n}$ is greater than 1.20 and smaller than 1.90.

**4.** Oligomer mixture according to at least one of Claims 1 to 3, **characterized in that** it is halogen-free.

**5.** Oligomer mixture according to at least one of Claims 1 to 4, **characterized in that** its dynamic viscosity is from 20 to 1000 mPas at 23°C.

**6.** Process for producing an oligomer mixture according to at least one of Claims 1 to 5, **characterized in that** in a first stage a dihydroxy compound of the formula HO-A-OH, in which A is defined as in Claim 1, is reacted with phosphorus oxychloride $POCl_3$, where the amount used of dihydroxy compound of the formula HO-A-OH per mole of phosphorus oxychloride is more than 1.0 mol and less than 2.0 mol, and the resultant mixture of oligomeric chlorophosphates of the formula (VIII)

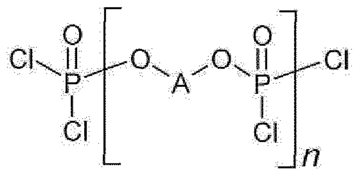

(VIII),

in which n is an integer from 0 to 100
is reacted in a second stage with at least one monohydroxy compound of the formula

M-OH, (IX),

in which M is $R^1$, $R^2$, $R^3$ or $R^4$, and
the definitions of $R^1$, $R^2$, $R^3$ and $R^4$ are those stated in Claim 1.

**7.** Use of an oligomer mixture according to at least one of Claims 1 to 5 as flame retardant.

**8.** Flame retardant preparations comprising at least one oligomere mixture according to at least one of Claims 1 to 5, one or more flame retardants B) differing from the oligomer mixture and optionally one or more auxiliaries C).

**9.** Flame retardant preparation according to Claim 8, **characterized in that** the flame retardant B) is one selected from the group of triethyl phosphate, triphenyl phosphate, diphenyl cresyl phosphate, tricresyl phosphate, isopropylated or butylated aryl phosphates, bisphenol A bis(diphenyl phosphate), resorcinol bis(diphenyl phosphate), neopentyl glycol bis(diphenyl phosphate), tris(chloroisopropyl) phosphate, tris(dichloropropyl) phosphate, dimethyl methanephosphonate, diethyl ethanephosphonate, dimethyl propanephosphonate, diethyl phosphinic acid derivatives and diethyl phosphinic acid salts, oligomeric phosphates or phosphonates, hydroxylated phosphorus compounds, 5,5-dimethyl-1,3,2-dioxaphasphorinane 2-oxide derivatives, 9,10-dihydro-9-oxa-10-phosphaphenanthrene 10-oxide (DOPO) and its derivatives, ammonium phosphate, ammonium polyphosphate, melamine phosphate, melamine polyphosphate, melamine, melamine cyanurate, alkyl ester of a tetrabromobenzoic acid, bromine-containing diols produced from tetrabromophthalic anhydride, bromine-containing polyols, bromine-containing diphenyl ethers, aluminium hydroxide, boehmite, magnesium hydroxide, expandable graphite and clay minerals.

**10.** Flame-retardant polyurethanes, **characterized in that** they comprise at least one oligomer mixture according to at least one of Claims 1 to 5.

**11.** Polyurethanes according to Claim 10, **characterized in that** they involve polyurethane foams, preferably based on polyether polyols or on polyester polyols.

**12.** Process for producing flame-retardant polyurethanes according to Claim 10, **characterized in that** at least one organic polyisocyanate is reacted with at least one compound which has at least two hydrogen atoms reactive towards isocyanates in the presence of at least one oligomer mixture according to at least one of Claims 1 to 5,

optionally in the presence of one or more compounds selected from the group of the blowing agents, stabilizers, catalysts, activators, auxiliaries and additives.

**13.** Process according to Claim 12, **characterized in that** from 3 to 25 parts by weight of oligomer mixture are used for every 100 parts by weight of compound having at least two hydrogen atoms reactive towards isocyanates.

**14.** Process according to Claims 12 and 13, **characterized in that** compound used having at least two hydrogen atoms reactive towards isocyanates comprises a polyether polyol.

**15.** Process according to Claims 12 and 13, **characterized in that** compound used having at least two hydrogen atoms reactive towards isocyanates comprises a polyester polyol.

**16.** Mouldings, lacquers, adhesives, coatings, adhesion promoters and fibres based on polyurethanes according to at least one of Claims 10 and 11.

**17.** Use of the polyurethanes according to at least one of Claims 10 and 11 as constituent in furniture cushioning, in textile inlays, in mattresses, in vehicle seats, in armrests, in components, in seat cladding and dashboard cladding, in cable sheathing, in gaskets, in coatings, in lacquers, in adhesion promoters, and in adhesives and fibres.

**Revendications**

**1.** Mélange d'oligomères, **caractérisé en ce qu'**il contient au moins trois poly(phosphates d'alkylène) de formule (I)

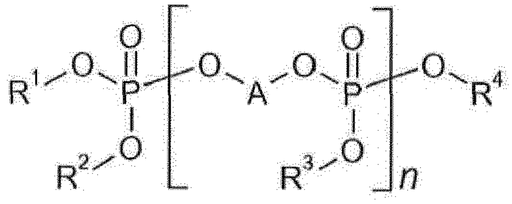

(I),

dans laquelle

$R^1$, $R^2$, $R^3$ et $R^4$ représentent chacun indépendamment les uns des autres un radical alkyle en $C_1$ à $C_8$ linéaire ou ramifié ou un radical alcoxyéthyle en $C_1$ à $C_4$ linéaire ou ramifié,
A représente un radical alkylène en $C_4$ à $C_{20}$ linéaire, ramifié et/ou cyclique, ou
A représente un radical de formule $-CH_2-CH=CH-CH_2-$, un radical de formule $-CH_2-C\equiv C-CH_2-$, un radical de formule $-CHR^5-CHR^6-(O-CHR^7-CHR^8)_a-$, un radical de formule $-CHR^5-CHR^6-S(O)_b-CHR^7-CHR^8-$ ou un radical de formule $-(CHR^5-CHR^6-O)_c-R^9-(O-CHR^7-CHR^8)_d-$,
a représentant un nombre entier de 1 à 5,
b représentant un nombre entier de 0 à 2,
c et d représentant indépendamment l'un de l'autre un nombre entier de 1 à 5, $R^5$, $R^6$, $R^7$ et $R^8$ représentant indépendamment les uns des autres H ou méthyle,
$R^9$ représentant un radical de formule $-CH_2-CH=CH-CH_2-$, un radical de formule $-CH_2-C\equiv C-CH_2-$, un radical 1,2-phénylène, un radical 1,3-phénylène, un radical 1,4-phénylène ou un radical de formule (II)

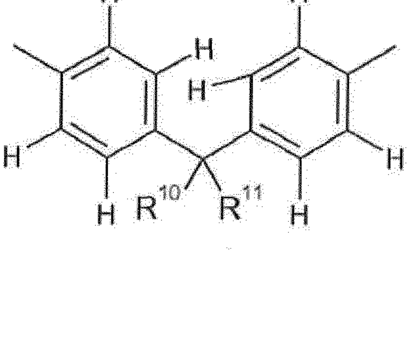

(II),

un radical de formule (III)

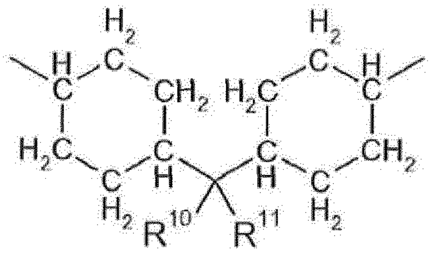

(III),

un radical de formule (IV)

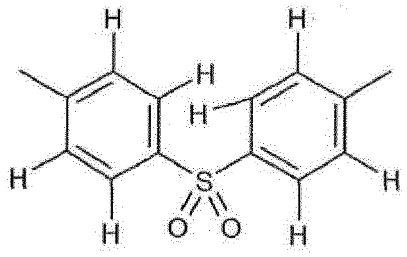

(IV),

ou un radical de formule -C(=O)-$R^{12}$-C(=O)-, dans laquelle

$R^{10}$ et $R^{11}$ représentant chacun indépendamment l'un de l'autre H ou alkyle en $C_1$ à $C_4$,
ou $R^{10}$ et $R^{11}$ représentant ensemble un cycle de 4 à 8 atomes C, éventuellement à substitution alkyle,
$R^{12}$ représentant un radical alkylène en $C_2$ à $C_8$ linéaire, ramifié et/ou cyclique, un radical 1,2-phénylène, un radical 1,3-phénylène ou un radical 1,4-phénylène, et
*n* représentait un nombre entier de 0 à 100,

à condition que lesdits au moins trois poly(phosphates d'alkylène) de formule (I) différent les uns des autres au moins au niveau du nombre *n* d'unités de répétition, et que la valeur moyenne du nombre d'unités de répétition $\overline{n}$ desdits au moins trois poly(phosphates d'alkylène) de formule (I) soit supérieure à 1,10 et inférieure à 2,00.

2. Mélange d'oligomères selon la revendication 1, **caractérisé en ce que**, dans la formule (I)
$R^1$, $R^2$, $R^3$ et $R^4$ sont identiques et représentent éthyle, n-propyle, iso-propyle, n-butyle, iso-butyle ou n-butoxyéthyle,
A représente un radical alkylène en $C_4$ à $C_6$ linéaire, ou
A représente un radical des formules

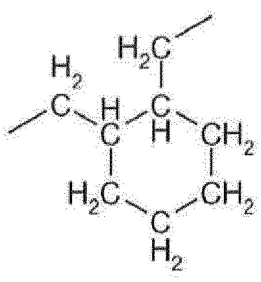

(V)

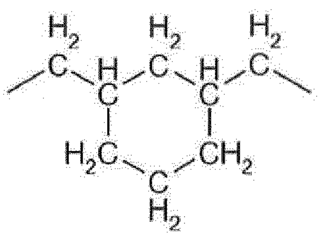

(VI)

ou

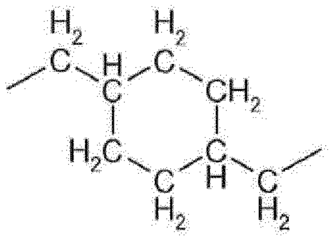

(VII)

ou

A représente un radical $-CHR^5-CHR^6-(O-CHR^7-CHR^8)_a-$, a représentant un nombre entier de 1 à 2, et $R^5$, $R^6$, $R^7$ et $R^8$ étant identiques et représentant H, ou un radical $-(CHR^5-CHR^6-O)_c-R^9-(O-CHR^7-CHR^8)_d-$, c et d représentant indépendamment l'un de l'autre un nombre entier de 1 à 2, $R^5$, $R^6$, $R^7$ et $R^8$ étant identiques et représentant H, $R^9$ représentant un radical de formule (II), $R^{10}$ et $R^{11}$ étant identiques et représentant méthyle, et *n*représentant un nombre entier de 0 à 20.

3. Mélange d'oligomères selon les revendications 1 et 2, **caractérisé en ce que** la valeur moyenne du nombre d'unités de répétition $\bar{n}$ est supérieure à 1,20 et inférieure à 1,90.

4. Mélange d'oligomères selon au moins l'une quelconque des revendications 1 à 3, **caractérisé en ce qu'**il est sans halogène.

5. Mélanges d'oligomères selon au moins l'une quelconque des revendications 1 à 4, **caractérisé en ce qu'**il présente une viscosité dynamique de 20 à 1 000 mPas à 23 °C.

6. Procédé de fabrication d'un mélange d'oligomères selon au moins l'une quelconque des revendications 1 à 5, **caractérisé en ce que**, lors d'une première étape, un composé dihydroxy de formule HO-A-OH, A ayant la signification indiquée dans la revendication 1, est mis en réaction avec de l'oxychlorure de phosphore $POCl_3$, plus de 1,0 mole et moins de 2,0 moles de composé dihydroxy de formule HO-A-OH étant utilisé par mole d'oxychlorure de phosphore, et le mélange ainsi obtenu de chlorophosphates oligomères de formule (VIII)

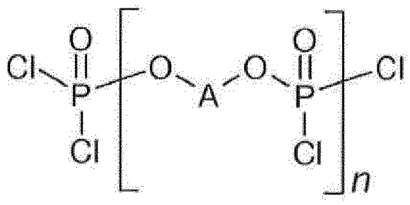

(VIII),

n représentant un nombre entier de 0 à 100,
est mis en réaction lors d'une seconde étape avec au moins un composé monohydroxy de formule

M-OH (IX)

M représentant $R^1$, $R^2$, $R^3$ ou $R^4$, et
$R^1$, $R^2$, $R^3$ et $R^4$ ayant les significations indiquées dans la revendication 1.

7. Utilisation d'un mélange d'oligomères selon au moins l'une quelconque des revendications 1 à 5 en tant qu'agent ignifuge.

8. Préparations d'agent ignifuge contenant au moins un mélange d'oligomères selon au moins l'une quelconque des revendications 1 à 5, un ou plusieurs agents ignifuges B) différentes du mélange d'oligomères, et éventuellement un ou plusieurs adjuvants C).

9. Préparation d'agent ignifuge selon la revendication 8, **caractérisée en ce que** l'agent ignifuge B) est choisi dans

le groupe constitué par le phosphate de triéthyle, le phosphate de triphényle, le phosphate de diphénylcrésyle, le phosphate de tricrésyle, les phosphates d'aryle isopropylés ou butylés, le bis(diphénylphosphate) de bisphénol A, le bis(diphénylphosphate) de résorcine, le bis(diphénylphosphate) de néopentylglycol, le phosphate de tris(chloroisopropyle), le phosphate de tris(dichloropropyle), le phosphonate de diméthylméthane, le phosphonate de diéthyléthane, le phosphonate de diméthylpropane, les dérivés et les sels de l'acide diéthylphosphinique, les phosphates ou phosphonates oligomères, les composés de phosphore contenant des groupes hydroxyle, les dérivés de 2-oxyde de 5,5-diméthyl-1,3,2-dioxaphosphorinane, le 10-oxyde de 9,10-dihydro-9-oxa-10-phosphaphénanthrène (DOPO) et ses dérivés, le phosphate d'ammonium, le polyphosphate d'ammonium, le phosphate de mélamine, le polyphosphate de mélamine, la mélamine, le cyanurate de mélamine, les esters alkyliques d'un acide tétrabromobenzoïque, les diols contenant du brome fabriqués à partir d'anhydride de l'acide tétrabromophtalique, les polyols contenant du brome, les éthers diphényliques contenant du brome, l'hydroxyde d'aluminium, la boehmite, l'hydroxyde de magnésium, le graphite expansé et les minéraux argileux.

**10.** Polyuréthanes ignifugés, **caractérisés en ce qu'**ils contiennent au moins un mélange d'oligomères selon au moins l'une quelconque des revendications 1 à 5.

**11.** Polyuréthanes selon la revendication 10, **caractérisés en ce qu'**il s'agit de mousses de polyuréthane, de préférence à base de polyéther-polyols ou de polyester-polyols.

**12.** Procédé de fabrication de polyuréthanes ignifugés selon la revendication 10, **caractérisé en ce qu'**au moins un polyisocyanate organique est mis en réaction avec au moins un composé qui dispose d'au moins deux atomes d'hydrogène réactifs avec les isocyanates, en présence d'au moins un mélange d'oligomères selon au moins l'une quelconque des revendications 1 à 5, éventuellement en présence d'un ou de plusieurs composés choisis dans la série constituée par les agents gonflants, les stabilisateurs, les catalyseurs, les activateurs, les adjuvants et les additifs.

**13.** Procédé selon la revendication 12, **caractérisé en ce que** 3 à 25 parties en poids de mélange d'oligomères sont utilisées pour 100 parties en poids de composé qui dispose d'au moins deux atomes d'hydrogène réactifs avec les isocyanates.

**14.** Procédé selon les revendications 12 et 13, **caractérisé en ce qu'**un polyéther-polyol est utilisé en tant que composé qui dispose d'au moins deux atomes d'hydrogène réactifs avec les isocyanates.

**15.** Procédé selon les revendications 12 et 13, **caractérisé en ce qu'**un polyester-polyol est utilisé en tant que composé qui dispose d'au moins deux atomes d'hydrogène réactifs avec les isocyanates.

**16.** Pièces moulées, vernis, adhésifs, revêtements, promoteurs d'adhésion et fibres à base de polyuréthanes selon au moins l'une quelconque des revendications 10 et 11.

**17.** Utilisation des polyuréthanes selon au moins l'une quelconque des revendications 10 et 11 en tant que constituant dans des rembourrages de meubles, des inserts textiles, des matelas, des sièges automobiles, des accoudoirs, des éléments de construction, des habillages de sièges et d'armatures, des enrobages de câbles, des joints, des revêtements, des vernis, des adhésifs, des promoteurs d'adhésion et des fibres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2952666 A
- US 3228998 A
- EP 0771810 A
- EP 1746129 A
- EP 2476684 A
- WO 2004099292 A
- US 3767732 A
- US 4382042 A
- WO 2002079315 A
- US 3891727 A
- US 3959415 A
- US 3959414 A
- US 4012463 A
- EP 0448159 A
- WO 9606885 A
- DE 1694142 A
- DE 1694215 A
- DE 1720768 A
- DE 2832253 A
- DE 2732292 A
- US 2764565 A
- GB 1162517 A
- DE 2153086 A
- EP 1746129 A1

### In der Beschreibung aufgeführte Nicht-Patentliteratur

- Kunststoff-Handbuch. Polyurethane. Carl-Hanser-Verlag, 1993, vol. VII
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann's Encyclopedia of Industrial Chemistry Release 2005, Electronic Release. Wiley-VCH, 2005
- **W. SIEFKEN.** *Justus Liebigs Annalen der Chemie,* vol. 562, 75-136
- Kunststoff-Handbuch. Carl-Hanser-Verlag, 1993, vol. VII, 104-123
- Kunststoff-Handbuch. **G. OERTEL.** Polyurethane. Carl-Hanser-Verlag, 1993, vol. VII
- *CHEMICAL ABSTRACTS,* 184538-58-7